# EUROPEAN PATENT SPECIFICATION

(11) **EP 0 852 991 B1**
(45) Date of publication and mention of the grant of the patent: **24.03.2004**
(21) Application number: 98100101.9
(22) Date of filing: 07.01.1998
(51) Int. Cl.: B27K 3/15

(54) **Method of conserving waterlogged materials**
Verfahren zur Konservierung von wassergefüllten Materialien
Méthode de conservation des matériaux pleins d'eau

(30) Priority: 08.01.1997 US 780499
(43) Date of publication of application: 15.07.1998
(73) Proprietor: DOW CORNING CORPORATION, Midland Michigan 48686-0994 (US)
(72) Inventor: Klosowski, Jerome Melvin, Bay City, Michigan 48706 (US); Smith, Charles Wayne, Bryan, Texas 77807 (US); Hamilton Donny L., Bryan, Texas 77897 (US)
(74) Representative: Sternagel, Fleischer, Godemeyer & Partner Patentanwälte

(56) References cited:
- EP-A- 0 621 115
- FR-A- 2 447 789
- GB-A- 1 164 689
- US-A- 3 956 174
- US-A- 5 120 581
- BAKI HAZER ET AL: "IMPROVEMENT OF WOOD PROPERTIES BY IMPREGNATION WITH MACROMONOMERIC INITIATORS (MACROINIMERS)" JOURNAL OF APPLIED POLYMER SCIENCE, vol. 47, no. 6, 10 February 1993, pages 1097-1103, XP000395761

## Description

This invention provides a method of preserving waterlogged materials; and more specifically, it deals with preserving artifacts that have been submerged in water for long periods of time. Further, this invention deals with waterlogged materials that have been previously subjected to preservation techniques using polyethylene glycol as preservative and a method of restoring such materials from the deleterious effects of said glycol.

The field of conservation of artifacts has drawn considerable interest in recent years and such conservation practices have been extensively utilized to preserve archaeological materials. The chief conservation concern is to bulk up the cell wall structure of waterlogged materials by introducing compounds that replace water in the damaged structure of the material. Prior art approaches to this concern include US-A-4,205,059; 4,244,992; 4,278,701; 4,291,101; 4,320,157 and 5,534,305. Allowing waterlogged wood to dry out without replacing water with a bulking agent results in warping and excessive shrinkage, sometimes leading to total destruction of the wooden artifact.

Because preserved wood needs to retain original coloration and have dimensional stability or integrity, one must be careful of the technique employed for conservation or preservation.

Prior art methods have used a variety of materials for conservation, including polyethylene glycol (PEG), acrylic resins and sugar. For example, it is well-known in this field to use polyethylene glycols as conservation materials, especially in wooden substrates. However, the materials so treated have a finite conservation time and an objective of the instant invention is therefore to prolong said time for such substrates.

For instance, one of the inventors herein has acquired some wooden tongue depressors made out of birch wood which had undergone controlled degradation and conservation using a variety of molecular weights of polyethylene glycol. Since polyethylene glycol has many physical forms, the higher molecular weights are often preferred for conservation. Such higher molecular weight glycols are normally solid materials. However, after nearly ten years of preservation, the above tongue depressors showed signs of surface pooling and excessive flexibility. These indications suggest that polyethylene glycol was in a semi-liquid form and that the employed glycol had destabilized, eventually leading to instability of the preserved wood. In most cases, the wood discoloration was translucent and unnatural in appearance. In some cases, the tongue depressors maintained a wet appearance and a general heightened degree of flexibility that exceeded the range of flexibility noted in the control samples.

Each of the afore-mentioned materials have their inherent benefits, but they also have their inherent disadvantages, such as in the case of polyethylene glycol.

Because museums around the world have used a wide range of molecular weights of polyethylene glycol as bulking agents to conserve waterlogged and deteriorated wooden artifacts and because polyethylene glycol treated artifacts require controlled curation, a new means of stabilizing this formerly utilized bulking agent are also necessary to ensure long term survival of previously treated artifacts.

Further, some of these methods require a post heating step and high temperatures to complete the preservation process. The wide variability in temperatures and humidity often causes wood samples treated by polyethylene glycol and/or sugar to weep, resulting in pooled liquids on their surfaces. Thus, highly controlled storage of wood treated by these processes is essential for long term survival of the artifact.

Unfortunately, a great deal of wood recovered in the past from many archaeological sites was either ignored or discarded because conservation processes were either too costly or too ineffective to guarantee satisfactory results for the conservation effort.

"Waterlogged" wood is employed herein as a reference to wood whose water content is above its natural saturation point. Thus, all of the sites available for hydrogen bonding are no longer available. Typically, this wood has undergone biological decay with inherent chemical and physical changes.

Under waterlogged conditions, water is in itself a conservation agent for the wood. It acts as a bulking agent, helping the wood to retain its shape and some degree of integrity. However, when waterlogged wood is allowed to dry, it suffers severe dimensional changes due to the collapse of the cell cavities and shrinkage of the cell walls. Thus, waterlogged wood conservation has as its main objective, the avoidance of shrinking and deformation of the wooden artifacts without commensurate loss of aesthetics of the artifact.

Polyethylene glycol conservation of wood has been used since the 1940's when its potential for treating waterlogged wood was first discovered. Polyethylene glycols are polymeric ethylene oxides that are commercially available from a number of manufacturers. They range in physical appearance from liquids to semi-solid waxes, to hard, wax-like solids. Typically, polyethylene glycol conservation is carried out in a batch process wherein the polyethylene glycol, having a number average molecular weight of 4000 is diluted with water and a biocide. The wooden artifacts are next immersed in this liquid and heat is applied (generally less than 100°C.) to evaporate water and to facilitate penetration of the polyethylene glycol/biocide combination. It is known that the appropriate molecular weight of the polyethylene glycol to use is a function of the degree of deterioration of the wood being treated. Lower molecular weights are advised for relatively sound wood and higher molecular weights are recommended for badly deteriorated wood.

Some methods even require that the wood have its initial bulking water displaced by using water soluble or water miscible solvents, followed by the use of dilute polyethylene glycol solutions.

The invention disclosed and defined in appended claims 1 and 2 deals with a method of conservation of wood substrates, especially wooden artifacts that have been immersed in water for long periods of time. This method comprises (I) impregnating a wooden substrate with a polyoxyethylene polymer or a mixture of polyoxyethylene polymers having an average of at least two carbinol groups per molecule and contemporaneously therewith or thereafter, (II) impregnating the impregnated substrate of (I) with sufficient crosslinker, or a mixture of crosslinkers, to crosslink at least a portion of the polyoxyethylene polymers of (I), and thereafter, (III) exposing the impregnated substrate of (I) and (II) to a catalyst, or a mixture of catalysts, for a time sufficient to cure.

The crosslinkers useful herein are selected from an alkoxysilane, or a mixture of alkoxysilanes, having the general formula RₐSi(OR')₄₋ₐ wherein R' is selected from hydrogen atom, vinyl group or an alkyl group having from 1 to 6 carbon atoms. Also, such silanes can be functional silanes, or a mixture of functional silanes, having the general formula RₐSi(X)₄₋ₐ wherein R in each formula above is selected from phenyl group, hydrogen atom, vinyl group or an alkyl group having from 1 to 12 carbon atoms, a in each case has a value of zero or 1 and X is selected from alkoxy, carboxy, oximo, enoloxy, amido, uriedo, carbamato and amino.

Especially useful crosslinkers are methyltrimethoxysilane or isobutyltrimethoxysilane. Useful orthosilicates as crosslinkers are ethylorthosilicate or tetraisopropylsilicate.

In another embodiment, wooden substrates, which already contain polyoxyethylene polymers, are preserved. Thus, there is also provided a method of preserving wooden substrates that contain polyoxyethylene polymers, said method comprising: (I) impregnating the wooden substrate containing the polyoxyethylene polymer with sufficient crosslinker, or a mixture of crosslinkers, to crosslink at least a portion of the polyoxyethylene polymers; and thereafter, (II) exposing the impregnated substrate of (I) to a catalyst, or a mixture of catalysts, for a time sufficient to cure.

In another embodiment of this invention, a method comprises (I) impregnating a wooden substrate already containing polyoxyethylene polymers with a curable siloxane containing a siloxane polymer, or a mixturee of siloxane polymers, having an average of at least two silanol groups per molecule and a sufficient amount of crosslinker, or a mixture of crosslinkers, to crosslink at least a portion of said siloxane polymer or mixture of siloxane polymers, to displace at least a portion of the polyoxyethylene polymers from the wooden substrate, and thereafter, (II) exposing the impregnated substrate of (I) to a catalyst, or a mixture of catalysts, for a time sufficient to cure.

Yet another embodiment of this invention is a method comprising (I) impregnating a wooden substrate that contains polyoxyethylene polymers with a hydrolyzable silane, or a mixture of hydrolyzable silanes, to displace at least a portion of the polyoxyethylene polymers from the wooden substrate, and thereafter, (II) exposing the impregnated substrate of (I) to a catalyst, or a mixture of catalysts, for a time sufficient to cure.

In a further method of preserving wooden substrates that contain polyoxyethylene polymer, the method comprises (I) impregnating a wooden substrate with a cyclosiloxane, or a mixture of cyclosiloxanes, having an average of at least two silane hydrogens per molecule, to displace at least a portion of the polyoxyethylene polymer from the wooden substrate, and thereafter, (II) exposing the impregnated substrate of (I) to a catalyst, or a mixture of catalysts, for a time sufficient to cure.

In a final method of preserving wooden substrates that contain polyoxyethylene polymer, the method comprises (I) impregnating a wooden substrate with a linear siloxane, or a mixture of linear siloxanes, having an average of at least two silane hydrogens per molecule, to displace at least a portion of the polyoxyethylene polymers from the wooden substrate, and thereafter, (II) exposing the product of (I) to a catalyst, or a mixture of catalysts, for a time sufficient to cure.

### Example 1

Several combinations of crosslinking agents and catalysts were evaluated for the purposes of determining if PEG could be conveniently crosslinked under the conditions used for the conservation of wooden artifacts.

In an attempt to duplicate the bulking of waterlogged wooden timbers from ships which were previously bulked using polyethylene glycol, a solution of PEG™ 3350 (polyethylene glycol having a number average molecular weight of 3350 g/mole) was prepared by placing a jar of water into a warming oven which was maintained at 70°C. (158°F.) Next, ten 10 gram portions of this polyethylene glycol were slowly added to water to give a solution of 50 weight percent of polyethylene glycol.

Several hundred birch wood tongue depressors were then placed in a four liter stainless steel beaker and immersed in water. Mesh screen and a heavy weight were placed on top of the tongue depressors in solution to prevent them from floating during their waterlogging processing. This processing may be conducted at ambient, superatmospheric or substmospheric pressures as is known and disclosed in the prior art. The wood, while still in solution, was then placed on a warmer plate and heated to a temperature of 43°C. (110°F.) for eight hours per day for ten days. After the tenth day, the water was changed to fresh water and the tongue depressors were removed from the hot plate and stored in fresh water at room temperature in a sealed jar. Samples of these woods were allowed to air dry at room temperature to determine if the structural integrity of the samples had been compromised. After twenty four hours, extensive warpage and shrinkage of all of the samples suggested that the tongue depressors had been sufficiently waterlogged for purposes of further testing.

Twenty samples were selected and placed into a large jar of fresh water. This jar was then stored in a vented warming oven which was maintained at a temperature of 70°C. (158°F.). Ten weight percent increments of polyethylene glycol were added to this water to form a solution, until 14 increments had been added, which resulted in a 58 weight percent solution of polyethylene glycol.

A single tongue depressor was removed from the solution and surface wiped with a paper towel to remove free-flowing solution from all of its surfaces. This sample was dark brown in color. This tongue depressor was Sample 1. This sample was placed into a graduated glass cylinder containing 50 milliliters of fresh methyltrimethoxysilane (MTM). A loose fitting cap was placed over the top of the cylinder and then the tongue depressor in solution was placed into the vented warming oven. The sample remained in MTM in the oven for a period of 24 hours. Next, it was removed from the oven and allowed to stand in the solution at room temperature for 5 hours. The tongue depressor was then removed from the MTM solution and lightly surface wiped with a paper towel.

The detailed apparatus and procedure were as follows. Each of the prepared samples, when treated, was placed in an individual containment chamber made of a 0.946 1 (one quart) jar with a tight fitting lid. In an inverted position, the lid of the unit formed a flat base, while the body of the jar formed a lid for the unit. An aluminum tray was used for the catalyst and this tray was placed on the containment chamber as a base and held in position with a small piece of double sided tape. A small section of expanded aluminum mesh, 11.3 centimeters (1.75 inches) square, was placed over the top of the catalyst tray. The edges of the mesh were then bent over, tightly securing said mesh to the tray. Small knife slits were made on the top surface of the containment chamber as a means of preventing pressurization during treatment.

Then, 44.4 ml (1.5 ounces) of the catalyst of choice was placed into the tray and the sample was thereafter placed into its respective containment positions resting on the mesh. In this position, the sample was placed directly over the top of the tray. Several small pieces of paper towel were placed on top of the screen before the waterlogged tongue depressor was placed in the unit to absorb free flowing polyethylene glycol that otherwise might contaminate. the catalyst. With the containment chamber lid firmly in place, the containment chamber was placed into a vented warming oven that was maintained at 71°C. (160°F.) to create a catalyst vapor in the chamber. In the case of Sample 1, dibutyltindilaurate was used. All samples, unless noted otherwise, were left in the catalyst vapor deposition for twenty four hours.

At the end of the treatment, each containment chamber was removed from the oven and carefully opened in a vented fume hood.

Sample 1 was light gray to brown in color. The edges of the tongue depressor appeared to be somewhat translucent, and generally, the surfaces of the sample felt waxy or smooth to the touch. There was no shrinkage, even after several weeks of exposure to air. The sample had not warped or changed structurally.

### Example 2

Two tongue depressors that had been initially treated to waterlog them were processed as in the method of Example 1, except that the catalyst was tetraisopropyltitanate. These samples, designated samples 2 and 3, had essentially the same appearance as Sample 1.

### Example 3

A tongue depressor, which had been initially treated to water log, was processed as in the method of Example 1, except that the catalyst was tin octoate. This sample was Sample 4 and it had essentially the same appearance as the previous samples.

### Example 4

Another treated tongue depressor was processed with MTM as above and the only exception was that the sample was treated for six hours instead of 24 hours. This sample was Sample 5 and it had essentially the same appearance as the previous samples.

### Example 5

A treated tongue depressor was treated with MTM as above and the only exception was that the sample was treated using MTM in which 3 weight percent of dibutyltindilaurate had been added.

The results of this testing are found in Table I.

**TABLE I**

| SAMPLE | RESULTS |
|---|---|
| 1 | slightly browner in color than non-treated no warpage, slight swelling |
| 2 | essentially same color as non-treated no warpage, slight swelling |
| 3 | good color, slight swelling |
| 4 | gray-brown color, slight swelling |
| 5 | slightly gray-brown, slight swelling |

### Example 6

Using gloves and a hot air gun, a water logged tongue depressor was slowly warmed. The side surface of a 0.47 l (one pint) tin can was also warmed with the air gun and while both the tongue depressor and can were still hot, the tongue depressor was wrapped around the side of the can and held in place until the can and tongue depressor had returned to room temperature, taking 20 minutes total. Rubber bands were then stretched around the tongue depressor and tin can and next positioned so that they held the tongue depressor in its wrapped position against the side of the can. The tongue depressor wrapped can was then placed in a 4.7 l (5 quart) can and a weight was placed on top of said wrapped can to prevent it from floating. Afterward, 1 liter of MTM was poured into the larger can so that the tongue depressor, which was wrapped on the side of the small can, was submerged in MTM. Once a loose fitting lid was positioned on top of the larger can, the unit was placed into a vented warming oven set at 71.1°C. (160°F.) and left in this treatment mode for 4 hours. The entire unit was then removed from the oven and moved to a vented fume hood. Thereafter, the small can and wrapped tongue depressor were removed from the warm MTM solution.

Still wrapped on the small can, the tongue depressor was subsequently placed into a large containment chamber resting on expanded aluminum mesh and over a catalyst tray containing 88.7 ml (three ounces) of dibutyltindilaurate. With the lid of the containment chamber in position, the unit was placed into a vented warming oven for eighteen hours. The sample in its containment chamber was then removed from the oven and opened in a vented fume hood. The rubber bands were removed and the semi-circle shaped tongue depressor slid easily from the side of the small tin can.

The curved tongue depressor shape was traced onto a piece of paper to track any change of the configuration. Over a period of time, the tongue depressor shape changed very little.

### Example 7

Six waterlogged tongue depressors were randomly selected and immediately placed into one liter of fresh acetone. The one liter container was then placed in a freezer mounted vacuum chamber (FMVC) and processed for 24 hours under vacuum to remove water in the wood. After the water/acetone displacement, the samples were next placed into a container with 1 liter of hydroxy end-blocked polydimethylsiloxane having a number average molecular weight of 7600 g/mole and containing 3 weight percent of MTM. The samples were weighted down in the solution. The container with the samples was thereafter placed into a freezer for FMVC treatment. A vacuum was applied to the samples in solution for 24 hours. Afterwards, the container containing the tongue depressors was removed from the freezer and the tongue depressors were removed from the polydimethylsiloxane. Said depressors were lightly wiped with a paper towel to remove free-flowing siloxane from the surfaces of these tongue depressors.

The tongue depressors were then placed into a 0.946 1 (one quart) jar as a closed containment chamber system for catalyst vapor deposition. In the center of the base of said containment chamber was placed the aluminum tray and it was fastened in place using a small piece of double sided tape. Small pieces of paper towel were piled on the screen to prevent any free-flowing siloxane from dripping into the catalyst tray.

Twenty grams of dibutyltindilaurate were subsequently placed in the catalyst tray, the chamber was placed in position and the entire unit was placed into a vented warming oven maintained at 71.1°C. (160°F.). The samples were left for sixty hours.

Upon removal from the system and after evaluation of fluids from the samples, it was noted that the tongue depressors were slightly rubbery in texture and that two of the six depressors had shrunk slightly.

Microscopic analysis of thin sections of one of these tongue depressors indicated that, generally, all of the cells of the wood contained cured polysiloxane.

## Claims

1. A method for conservation of wood substrates comprising:
(I) impregnating a wooden substrate with a mixture of:
(i) a polyoxyethylene polymer or a mixture of polyoxyethylene polymers having an average of at least two carbinol groups per molecule. and
(ii) sufficient crosslinker or a mixture of crosslinkers to crosslink the polyoxyethylene polymer, wherein said crosslinker or crosslinkers are selected from the group of a hydrolyzable silane or a mixture of hydrolyzable silanes having the general formula:
RₐSi(X)₄₋ₐ
wherein R is selected from phenyl group, hydrogen atom, vinyl or an alkyl group having from 1 to 12 carbon atoms, a has a value of zero or 1 and X is selected from hydroxy, alkoxy having 1 -12 carbon atoms, preferably 1-6 carbon atoms, carboxy, oximo, enoloxy, amido, uriedo, carbamato and amino; a cyclosiloxane or a mixture of cyclosiloxanes having an average of at least two silicon-bonded hydrogens per molecule; and a non-cyclic siloxane or a mixture of non-cyclic siloxanes having an average of at least two silicon-bonded hydrogens per molecule and having a number average molecular weight of 10,000 g/mole or less.
and thereafter,
(II) exposing the impregnated wooden substrate to a catalyst or a mixture of catalysts for a time sufficient to cure.

2. A method for conservation of wooden substrates that contain polyoxyethylene polymers comprising:
(I) impregnating the wooden substrate containing said polyoxyethylene polymers with sufficient crosslinker or a mixture of crosslinkers to crosslink the polyoxyethylene polymers, wherein said crosslinker or crosslinkers are selected from the group of a hydrolyzable silane or a mixture of hydrolyzable silanes having the general formula:
RₐSi(X)₄₋ₐ
wherein R is selected from phenyl group, hydrogen atom, vinyl or an alkyl group having from 1 to 12 carbon atoms, a has a value of zero or 1 and X is selected from hydroxy, alkoxy having 1 -12 carbon atoms, preferably 1-6 carbon atoms, carboxy, oximo, enoloxy, amido, uriedo, carbamato and amino: a cyclosiloxane or a mixture of cyclosiloxanes having an average of at least two silicon-bonded hydrogens per molecule: and a non-cyclic siloxane or a mixture of non-cyclic siloxanes having an average of at least two silicon-bonded hydrogens per molecule and having a number average molecular weight of 10,000 g/mole or less ,
and thereafter,
(II) exposing the impregnated substrate of (I) to a catalyst or a mixture of catalysts for a time sufficient to cure.

3. The method of any of claims 1 or 2 wherein a curable siloxane system containing a siloxane polymer or a mixture of siloxane polymers having an average of at least two silanol groups per molecule is added in step (I) before performing step (II).

4. The method of any of claims 1 to 3 wherein the crosslinker is isobutyltrimethoxysilane.

5. The method of any of claims 1 to 3 wherein the crosslinker is tetraethylorthosilicate.

6. The method of any of claims 2-5 wherein the crosslinker displaces at least a portion of the polyoxyethylene polymers from the wooden substrate.

## Patentansprüche

1. Ein Verfahren zum Konservieren von hölzernen Substraten, umfassend:
(I) Imprägnieren eines hölzernen Substrats mit einer Mischung aus:
(i) einem Polyoxyethylenpolymer mit einer Mischung von Polyoxyethylenpolymeren mit durchschnittlich wenigstens zwei Carbinolgruppen je Molekül, und
(ii) genügend Vernetzer oder eine Mischung aus Vernetzern, um das Polyoxyethylenpolymer zu vernetzen, wobei dieser Vernetzer oder diese Vernetzer ausgewählt sind aus der Gruppe aus einem hydrolysierbaren Silan oder einer Mischung von hydrolysierbaren Silanen mit der allgemeinen Formel:
RₐSi(X)₄₋ₐ,
worin R ausgewählt ist aus einer Phenylgruppe, einem Wasserstoffatom, einer Vinyl- oder einer Alkylgruppe mit von 1 bis 12 Kohlenstoffatomen, a einen Wert von 0 oder 1 hat und X ausgewählt ist aus Hydroxy, Alkoxy mit 1-12 Kohlenstoffatomen, bevorzugt 1-6 Kohlenstoffatomen, Carboxy, Oximo, Enoloxy, Amido, Uriedo, Carbamato und Amino; einem Cyclosiloxan oder einer Mischung von Cyclosiloxanen mit im Durchschnitt wenigstens 2 siliciumgebundenen Wasserstoffen je Molekül; und einem nicht-zyklischen Siloxan oder einer Mischung aus nicht-zyklischen Siloxanen mit im Durchschnitt wenigstens zwei siliciumgebundenen Wasserstoffen je Molekül und mit einem zahlenmittleren Molekulargewicht von 10.000 g/mol oder weniger,
und danach
(II) das Aussetzen des imprägnierten hölzernen Substrats gegenüber einem Katalysator oder einer Mischung aus Katalysatoren für eine Zeit, die ausreicht, um zu härten.

2. Ein Verfahren zur Konservierung von hölzernen Substraten, die Polyoxyethylenpolymere enthalten, umfassend:
(I) Imprägnieren des hölzernen Substrats, das solche Polyoxyethylenpolymere enthält, mit ausreichend Vernetzer oder eine Mischung aus Vernetzern, um die Polyoxyethylenpolymere zu vernetzen, wobei dieser Vernetzer oder diese Vernetzer ausgewählt sind aus der Gruppe aus einem hydrolysierbaren Silan oder einer Mischung von hydrolysierbaren Silanen mit der allgemeinen Formel:
RₐSi(X)₄₋ₐ,
worin R ausgewählt ist aus einer Phenylgruppe, einem Wasserstoffatom, einer Vinyl- oder einer Alkylgruppe mit von 1 bis 12 Kohlenstoffatomen, a einen Wert von 0 oder 1 hat und X ausgewählt ist aus Hydroxy, Alkoxy mit 1-12 Kohlenstoffatomen, bevorzugt 1-6 Kohlenstoffatomen, Carboxy, Oximo, Enoloxy, Amido, Uriedo, Carbamato und Amino; einem Cyclosiloxan oder einer Mischung von Cyclosiloxanen mit im Durchschnitt wenigstens 2 siliciumgebundenen Wasserstoffen je Molekül; und einem nicht-zyklischen Siloxan oder einer Mischung aus nicht-zyklischen Siloxanen mit im Durchschnitt wenigstens zwei siliciumgebundenen Wasserstoffen je Molekül und mit einem zahlenmittleren Molekulargewicht von 10.000 g/mol oder weniger,
und danach
(II) das Aussetzen des imprägnierten Substrats aus (I) gegenüber einem Katalysator oder einer Mischung von Katalysatoren für eine Zeit, die ausreicht, um zu härten.

3. Das Verfahren gemäß einem der Ansprüche 1 oder 2, wobei ein härtbares Siloxansystem, welches ein Siloxanpolymer oder eine Mischung aus Siloxanpolymeren mit im Durchschnitt wenigstens zwei Silanolgruppen pro Molekül enthält, in Schritt (I) zugegeben wird, bevor Schritt (II) durchgeführt wird.

4. Das Verfahren gemäß einem der Ansprüche 1 bis 3, wobei der Vernetzer Isobutyltrimethoxysilan ist.

5. Das Verfahren gemäß einem der Ansprüche 1 bis 3, wobei der Vernetzer Tetraethylorthosilicat ist.

6. Das Verfahren gemäß einem der Ansprüche 2 bis 5, wobei der Vernetzer wenigstens einen Teil der Polyoxyethylenpolymere in dem hölzernen Substrat ersetzt.

## Revendications

1. Procédé de conservation de substrats en bois, comprenant :
(I) l'imprégnation du substrat en bois avec un mélange consistant en :
(i) un polymère de polyoxyéthylène ou un mélange de polymères de polyoxyéthylène ayant une moyenne d'au moins deux radicaux carbinol par molécule, et
(ii) suffisamment de réticulant ou d'un mélange de réticulants pour réticuler le polymère de polyoxyéthylène, où lesdits réticulant ou réticulants sont choisis parmi le groupe d'un silane hydrolysable ou d'un mélange de silanes hydrolysables, ayant la formule générale :
RₐSi(X)₄₋ₐ
où R est choisi parmi le radical phényle, l'atome d'hydrogène, le radical vinyle ou un radical alkyle ayant de 1 à 12 atomes de carbone, 'a' a la valeur de 0 ou de 1 et X est choisi parmi hydroxyle, alcoxy ayant 1-12 atomes de carbone, de préférence 1-6 atomes de carbone, carboxy, oximo, énoloxy, amido, uréido, carbamato et amino ; un cyclosiloxane ou un mélange de cyclosiloxanes ayant une moyenne d'au moins deux hydrogènes liés au silicium par molécule, et un siloxane non cyclique ou un mélange de siloxanes non cycliques, ayant une moyenne d'au moins deux hydrogènes liés au silicium par molécule et ayant un poids moléculaire moyen en nombre de 10 000 g/mole ou moins,
et ensuite,
(II) l'exposition du substrat en bois imprégné à un catalyseur ou à un mélange de catalyseurs pendant une période suffisante pour durcir.

2. Procédé de conservation de substrats en bois, qui contiennent des polymères de polyoxyéthylène comprenant :
(I) l'imprégnation du substrat en bois contenant lesdits polymères de polyoxyéthylène avec suffisamment de réticulant ou d'un mélange de réticulants pour réticuler le polymère de polyoxyéthylène, où lesdits réticulant ou réticulants sont choisis parmi le groupe d'un silane hydrolysable ou d'un mélange de silanes hydrolysables, ayant la formule générale :
RₐSi(X)₄₋ₐ
où R est choisi parmi le radical phényle, l'atome d'hydrogène, le radical vinyle ou un radical alkyle ayant de 1 à 12 atomes de carbone, 'a' a la valeur de 0 ou de 1 et X est choisi parmi hydroxyle, alcoxy ayant 1-12 atomes de carbone, de préférence 1-6 atomes de carbone, carboxy, oximo, énoloxy, amido, uréido, carbamato et amino ; un cyclosiloxane ou un mélange de cyclosilanes ayant une moyenne d'au moins deux hydrogènes liés au silicium par molécule, et un siloxane non cyclique ou un mélange de siloxanes non cycliques, ayant une moyenne d'au moins deux hydrogènes liés au silicium par molécule et ayant un poids moléculaire moyen en nombre de 10 000 g/mole ou moins,
et ensuite,
(II) l'exposition du substrat imprégné de (I) à un catalyseur ou à un mélange de catalyseurs pendant une période suffisante pour durcir.

3. Procédé selon l'une quelconque des revendications 1 ou 2, dans lequel un système de siloxane durcissable, contenant un polymère de siloxane ou un mélange de polymères de siloxane ayant une moyenne de deux radicaux silanol par molécule est ajouté à l'étape (I) avant de réaliser l'étape (II).

4. Procédé selon l'une quelconque des revendications 1 à 3, dans lequel le réticulant est l'isobutyltriméthoxysilane.

5. Procédé selon l'une quelconque des revendications 1 à 3, dans lequel le réticulant est l'orthosilicate de tétraéthyle.

6. Procédé selon l'une quelconque des revendications 2 à 5, dans lequel le réticulant déplace au moins une partie des polymères polyoxyéthylène du substrat en bois.
